# EUROPÄISCHE PATENTANMELDUNG

(11) **EP 0 794 641 A2**
(43) Veröffentlichungstag der Anmeldung: **10.09.1997**
(21) Anmeldenummer: 97101147.3
(22) Anmeldetag: 24.01.1997
(51) Int. Cl.: H04L 29/06

(54) **Auswerteeinrichtung für eine meldungsorientierte Schicht-3-Kommunikation**

(30) Priorität: 31.01.1996 DE 19603475
(71) Anmelder: SIEMENS AKTIENGESELLSCHAFT, 80333 München (DE)
(72) Erfinder: Gellhaus, Christoph, Dr.rer.nat, 58454 Witten (DE); Da Silva, Mauricio, Dipl.-Ing., 44227 Dortmund (DE); Leimkötter, Ulrich, Dipl.-Ing., 45888 Gelsenkirchen (DE)

(57) **Zusammenfassung**

Programmgesteuerte Auswerteeinrichtung für eine meldungsorientierte Schicht-3-Kommunikation zwischen einer Kommunikations-Vermittlungseinrichtung und einer peripheren Einrichtung einer Kommunikationsanlage unter Verwendung eines ersten Protokolls sowie für eine meldungsorientierte Schicht-3-Kommunikation zwischen der Kommunikations-Vermittlungseinrichtung und einem Endgerät unter Verwendung eines zweiten Protokolls über die periphere Einrichtung. Das erste und das zweite Protokoll bestehen aus durch Protokolldiskriminatoren gekennzeichneten Funktionsblöcken (ADM, MAIN, TEST, REST, LINK, BCAST, LCE, MM, CC). Jede Protokollmeldung des ersten und des zweiten Protokolls enthält eine Protokolldiskriminatorangabe. Die Auswerteeinrichtung hat eine einzige Hauptablaufsteuerung zur funktionsblockspezifischen, tabellengesteuerten Auswertung des ersten und des zweiten Protokolls mit Hilfe einer protokolldiskriminatorabhängigen Verzweigung. Als periphere Einrichtung ist beispielsweise eine Basisstation einer zellularen Kommunikationsanlage mit drahtlos erreichbaren Endgeräten vorgesehen. Die Auswerteeinrichtung dient dann der Schicht-3-Kommunikation zwischen einer Peripheriebaugruppe der Kommunikations-Vermittlungseinrichtung und dieser Basisstation sowie einem drahtlos über diese Basisstation verbindbaren Endgerät.

## Beschreibung

Die Erfindung betrifft eine programmgesteuerte Auswerteeinrichtung zur Auswertung von Meldungen, für eine meldungsorientierte Schicht-3-Kommunikation zwischen einer Kommunikations-Vermittlungseinrichtung und einer peripheren Einrichtung einer Kommunikationsanlage unter Verwendung eines ersten Protokolls sowie für eine meldungsorientierte Schicht-3-Kommunikation zwischen der Kommunikations-Vermittlungseinrichtung und einem Endgerät über diese periphere Einrichtung unter Verwendung eines zweiten Protokolls. Insbesondere betrifft die Erfindung eine solche Auswerteeinrichtung für eine meldungsorientierte Schicht-3-Kommunikation zwischen einer peripheren Baugruppe einer Kommunikations-Vermittlungseinrichtung und einer Basisstation zum bidirektionalen Umsetzen von drahtgebunden übertragenen Signalen auf der Vermittlungseinrichtungsseite und drahtlos übertragenen Signalen auf der Endgeräteseite und für eine Schicht-3-Kommunikation zwischen dieser Peripheriebaugruppe der Kommunikations-Vermittlungseinrichtung und einem drahtlos über diese Basisstation verbindbaren Endgerät.

Programmgesteuerte Einrichtungen für eine meldungsorientierte Schicht-3-Kommunikation zwischen Kommunikations-Vermittlungseinrichtungen und peripheren Einrichtungen haben eine protokollspezifische Auswerteeinrichtung (Interpreter) zur Auswertung der Meldungen eines Protokolls, mit einer für alle Meldungen des Protokolls vorgesehenen umfangreichen Hauptablaufsteuerung und mit Tabellen, die Informationen und Zeiger für nachgeordnete Tabellen enthalten, sowie mit Synthese- und Analysefunktionen. Werden Meldungen eines anderen Protokolls von der Kommunikations-Vermittlungseinrichtung über diese periphere Einrichtung zu einer anderen Einrichtung wie z.B. einem Endgerät übertragen, so werden sie mit Hilfe einer für dieses Protokoll spezifischen Auswerteeinrichtung mit eigener Hauptablaufsteuerung ausgewertet.

Hierbei ist für jede Tabelle, jede Synthesefunktion und jede Analysefunktion eines jeden Protokolls und zusätzlich für die Ablaufsteuerung in jeder Auswerteeinrichtung Speicherplatz in einer Speichereinrichtung erforderlich.

Eine protokollspezifische Hauptablaufsteuerung für eine Auswerteeinrichtung, die Meldungen eines mehrere Funktionen erfüllenden Protokolls auswerten soll, ist recht umfangreich und benötigt daher viel Speicherplatz. Außerdem wird für das Abarbeiten eines solchen Ablaufs viel Zeit benötigt, was besonders bei Echtzeitprozessen unerwünscht ist.

Aufgabe der Erfindung ist das Bereitstellen einer programmgesteuerten Auswerteeinrichtung zur tabellengesteuerten Auswertung von Meldungen für eine meldungsorientierte Schicht-3-Kommunikation zwischen einer Kommunikations-Vermittlungseinrichtung und einer peripheren Einrichtung einer Kommunikationsanlage unter Verwendung eines ersten Protokolls sowie für eine meldungsorientierte Schicht-3-Kommunikation zwischen der Kommunikations-Vermittlungseinrichtung und einem Endgerät über diese periphere Einrichtung unter Verwendung eines zweiten Protokolls, wobei weniger Speicherplatz als bisher benötigt werden soll.

Diese Aufgabe löst die Erfindung durch eine Einrichtung mit den Merkmalen des Patentanspruchs 1. Günstige Ausgestaltungen sind Gegenstand von Unteransprüchen.

Erfindungsgemäß sind das erste und das zweite Protokoll in Funktionsblöcke aufgeteilt, die jeweils durch Protokolldiskriminatoren gekennzeichnet sind. Jede Protokollmeldung des ersten und des zweiten Protokolls enthält eine Protokolldiskriminatorangabe. Zusätzlich sind eine Meldungstypangabe, Meldungselementangaben und eventuell Timer-Wertangaben vorgesehen. Es ist nur eine einzige Hauptablaufsteuerung zur funktionsblockspezifischen Auswertung von Meldungen des ersten und des zweiten Protokolls vorhanden. Die funktionsblockspezifische Auswertung wird durch eine protokolldiskriminatorabhängige Verzweigung in der Hauptablaufsteuerung erreicht.

Durch die Aufteilung der Protokolle in Funktionsblöcke und die Kennzeichnung dieser Protokollkomponenten durch Protokolldiskriminatoren können Analyse- und Synthesefunktionen durch entsprechende Zeigerverweise beliebig zur Auswertung aller Protokollkomponenten eingesetzt werden.

Durch die gemeinsame Nutzung einer einzigen Hauptablaufsteuerung für beide Protokolle kann Speicherplatz für die Steuerprogramme eingespart werden. Durch die tabellengesteuerte, funktionsblockspezifische Auswertung wird die Länge des Auswerteablaufs dynamisch der auszuwertenden Meldung angepaßt, wodurch Rechenzeit eingespart wird.

Wenn das erste und das zweite Protokoll zwischen der Kommunikations-Vermittlungseinrichtung und der peripheren Einrichtung geschachtelt sind, d.h., wenn eine Meldung des zweiten Protokolls (für eine Kommunikation zwischen der Kommunikations-Vermittlungseinrichtung und einem Endgerät) als Meldungselement einer Meldung des ersten Protokolls (zwischen der Kommunikations-Vermittlungseinrichtung und der peripheren Einrichtung) übermittelt wird, wertet die Auswerteeinrichtung gemäß dem in dieser Meldung enthaltenen funktionsblockspezifischen Protokolldiskriminator für das erste Protokoll durch Abarbeiten der Hauptablaufsteuerung diese Meldung aus, erhält hierdurch als Meldungselement die Meldung gemäß dem zweiten Protokoll und wertet dann gemäß dem in der Meldung enthaltenen funktionsblockspezifischen Protokolldiskriminator für das zweite Protokoll durch Abarbeiten der Hauptablaufsteuerung diese Meldung aus. Es wird auch hierbei die Länge des Steuerungsablaufs dynamisch der Funktion angepaßt.

Befindet sich im zuvor geschilderten Fall die Auswerteeinrichtung in der peripheren Einrichtung und wird die geschachtelte Meldung von der Kommunikations-Vermittlungseinrichtung empfangen, so erfolgt für die Schicht-3-Meldung gemäß dem zweiten Protokoll eine Protokollumsetzung in den Schichten 2 und 1 und eine Übermittlung an das Endgerät.

Die erfindungsgemäße Auswerteeinrichtung kann insbesondere zwischen einer Peripheriebaugruppe einer Kommunikations-Vermittlungseinrichtung und einer Basisstation zum bidirektionalen Umsetzen von drahtgebunden übertragenen Signalen auf der Vermittlungseinrichtungsseite und drahtlos übertragenen Signalen auf der Endgeräteseite eingesetzt werden. Solche Kommunikations-Vermittlungseinrichtungen können mit solchen Basisstationen Zellularsysteme bilden, beispielsweise Mobilfunksysteme oder Kommunikationssysteme nach dem europäischen Standard ETS 300 175, der gemäß der Abkürzung für Digital European Cordless Telecommunications mit DECT bezeichnet wird. Auf die Funktionsweise einer erfindungsgemäßen Auswerteeinrichtung in einem solchen Anwendungsfall wird weiter unten für ein Ausführungsbeispiel eingegangen.

In einer günstigen Ausgestaltungsform der Erfindung hat die Auswerteeinrichtung zur tabellengesteuerten Auswertung von Meldungen eine alle Protokolldiskriminatoren enthaltende Protokollverzweigungstabelle als Einstiegstabelle. Diese enthält für jeden Protokolldiskriminator einen Zeiger auf eine Datenbasistabelle. Jede Datenbasistabelle enthält den Aufbau aller Meldungen der ihr zugehörigen Protokollkomponente. Hierzu können in einer Datenbasistabelle insbesondere Zeiger auf spezifische andere Tabellen vorgesehen sein, wie zum Beispiel Timerwertetabellen, Meldungselementetabellen sowie Synthese- und/oder Analysefunktionen. In einem solchen Fall haben die Tabellen und Funktionen eine baumartige Struktur.

Durch eine Steuerungsstruktur mit Datenbasis-Tabellen wird die Wartung, d.h. das Erweitern oder Ändern der Auswerteeinrichtung erleichtert, da neue Meldungen durch Einträge in eine Datenbasis bearbeitet werden können.

Vorzugsweise hat die Auswerteeinrichtung eine Meldungselementetabelle, die für jedes Meldungselement angibt, ob es notwendig oder möglich ist. Außerdem kann sie eine Meldungselemente-Funktionstabelle mit Zeigern auf die Analysefunktion und die Synthesefunktion der einzelnen Meldungselemente enthalten. Dadurch wird die beliebige Verwendung der einzelnen Funktionen in unterschiedlichen Meldungen möglich.

In einer günstigen Weiterbildung dieses Aspektes der Erfindung ist die Meldungselementetabelle mehrschichtig ausgeführt und enthält eine Meldungstyptabelle mit einem Zeiger auf die den Meldungstyp betreffenden Informationselemente einer Informationselemetetabelle. Die Informationselemetetabellen sind in diesem Fall Teil der Meldungselementetabelle und geben jeweils an, ob die Informationselemente des jeweiligen Meldungstyps notwendig oder optional sind. In diesem Fall ist anstelle der Meldungselemente-Funktionstabelle eine Informationselement-Funktionstabelle vorgesehen.

Wie oben erwähnt, enthält jede Meldung vorzugsweise eine Information über einen oder mehrere Timerwerte. Die Struktur der Auswerteeinrichtung wird hierbei vereinfacht, wenn eine Timerwertetabelle mit protokollspezifischen Zeitwerten vorgesehen ist und wenn jede Datenbasistabelle einen Zeiger auf einen entsprechenden Zeitwert der Timerwertetabelle enthält. Dadurch können die für verschiedene Protokolle und für verschiedene Funktionen eines Protokolls unterschiedlichen Verzögerungszeitwerte, Wartezeitwerte oder Auswertegeschwindigkeiten trotz einer einzigen Hauptablaufsteuerung berücksichtigt werden. Die Angabe einer Timerwerte-Information in jeder Meldung ermöglicht das gezielte Anpassen der Auswerteeinrichtung an die auszuwertende Meldung.

Den vorstehenden Erläuterungen ist zu entnehmen, daß eine erfindungsgemäße Auswerteeinrichtung wenig Speicherplatz benötigt, da die Hauptablaufsteuerung nur einmal vorhanden ist. Durch eine günstige Ausgestaltung ist die Auswerteeinrichtung leicht wartbar. Außerdem bietet sie einen hohen Synergienutzen, da vorhandene Funktionen durch Zeigerverweis beliebig in allen Protokollkomponenten einsetzbar sind. Zudem hat eine erfindungsgemäß strukturierte Auswerteeinrichtung ein gutes dynamisches Verhalten, da der Gesamtablauf einer Auswertung selbst bei geschachtelten Meldungen unterschiedlicher Protokolle jeweils in einem einzigen Arbeitsstring erfolgt.

Nachstehend wird die Erfindung anhand eines Ausführungsbeispiels unter Bezugnahme auf die Figuren näher erläutert.

Es zeigt:
Fig. 1 als Blockdarstellung Komponenten einer Kommunikationsanlage und diesen zugeordnet die Verteilung der Schichten 1, 2 und 3 eines leitungsgebunden übertragenen Protokolls und eines Schnurlosprotokolls;
Fig. 2 an Hand der Blockdarstellung der Softwarestruktur des Schicht-3-Prozesses eine mögliche Aufteilung der Schicht-3-Schnurlosprotokolle einer in Fig. 1 gezeigten Kommunikationsanlage mit den einzelnen Funktionsblöcken zugeordneten Protokolldiskriminatoren; und
Fig. 3 die Datenstrukturen der Protokolldatenbasen anhand von Datentabellen und deren Verkettung für die Schnurlos-Schicht-3-Protokolle.

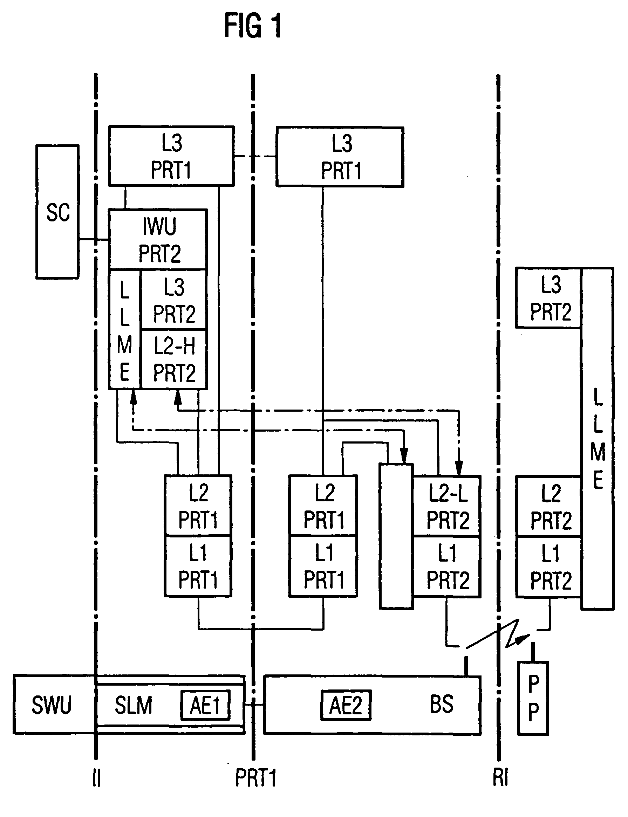

In Fig. 1 unten ist in einer Blockdarstellung einer Kommunikationsanlage eine Kommunikationsvermittlungseinrichtung SWU mit einer Peripheriebaugruppe SLM dargestellt. Außerdem ist als periphere Einrichtung der Kommunikationsanlage eine Basisstation BS zum Umsetzen von drahtgebunden übertragenen Signalen und drahtlos übertragenen Signalen sowie ein tragbares Kommunikationsendgerät PP dargestellt. Die Peripheriebaugruppe SLM kommuniziert mit der Systemsteuerung SC der Kommunikationsvermittlungseinrichtung SWU über eine interne Schnittstelle II beispielsweise mit Hilfe eines nicht in der Darstellung berücksichtigten ISDN-Protokolls. Die Kommunikation zwischen der Peripheriebaugruppe SLM und der Basisstation BS erfolgt mit Hilfe eines für drahtgebundene Übertragung vorgesehenen ersten Protokolls PRT1. Zwischen der Basisstation und dem Schnurlosendgerät PP findet eine Kommunikation über eine Funkschnittstelle RI unter Verwendung eines für die Funkübertragung vorgesehenen zweiten Protokolls PRT2 statt.

Sowohl die Peripheriebaugruppe SLM als auch die als periphere Einrichtung vorgesehene Basisstation BS hat jeweils eine Auswerteeinrichtung AE1, AE2 zur Auswertung von Meldungen des ersten und des zweiten Protokolls. Oberhalb des genannten Blockschaltbildes zeigt Fig. 1 in vertikaler Zuordnung die Protokollarchitektur für die dargestellte Schnurloskommunikationsanlage.

In dem gezeigten Ausführungsbeispiel einer Kommunikationsanlage für Schnurlostelefonie entspricht das zweite Protokoll dem DECT-Protokoll oder dem T-DECT-Protokoll (transnational). Hierbei ist die Schicht 2 des DECT-Protokolls aufgeteilt in einen unteren, in der Basisstation BS liegenden Anteil L2-L PRT2 und in einen oberen, in der Peripheriebaugruppe SLM der Kommunikationsvermittlungseinrichtung SWU liegenden Teil L2-H PRT2. Der untere Anteil L2-L PRT2 der Schicht 2 beinhaltet hierbei u.a. die Funktion des Kanalwechsels (bearer handover) bei aufgebauter Verbindung innerhalb derselben Basisstation BS. Der obere Anteil L2-H PRT2 der Schicht 2 des DECT-Protokolls beinhaltet mindestens die Funktion des Umschaltens einer bestehenden Verbindung von einer Basisstation BS zu einer anderen Basisstation (connection handover).

Wie in Fig. 1 zu erkennen ist, liegen endgeräteseitig die Schichten 1, 2 und 3 des zweiten Protokolls L1 PRT2, L2 PRT2, L3 PRT2 in dem Endgerät PP und werden über eine Lenkungseinheit für die unteren Schichten LLME (low layer management entity) koordiniert.

In der durch die Kommunikationsvermittlungseinrichtung SWU mit ihren Peripherieanschlußgruppen SLM und durch periphere Einrichtungen in Form von Basisstationen BS gebildeten ortsfesten Kommunikationseinrichtung liegen mit Ausnahme der höheren Komponente L2-H PRT2 der Schicht 2 des DECT-Standards die Schichten 1 und 2 des DECT-Protokolls L1 PRT2, L2-L PRT2 in der Basisstation und die Schicht 3 L PRT2 des DECT-Protokolls liegt in der Kommunikationsvermittlungseinrichtung SWU, insbesondere in der Peripheriebaugruppe SLM. Sowohl in der Peripheren Einrichtung BS, als auch in der Peripheriebaugruppe SLM werden sie durch eine Lenkungseinheit für die unteren Schichten LLME (low layer management entity) koordiniert.

Die Schichten 1, 2 und 3 des für die Steuerung der Basisstation und für den Aufbau der Funkstrecke zwischen Basisstation und Kommunikationsendgerät vorgesehenen ersten Protokolls PRT1 liegen jeweils in der Basisstation BS und in der Peripheriebaugruppe SLM.

Die Schicht 3 L3 PRT2 des zweiten Protokolls PRT2 kommuniziert über eine Umsetzeinheit IWU PRT2 (interworking unit) mit der Schicht 3 L3 PRT1 des ersten Protokolls PRT1 sowie über die interne Schnittstelle II mit Hilfe eines weiteren Protokolls mit der entsprechenden Schicht der zentralen Steuerung SC der Kommunikationsvermittlungseinrichtung SWU.

Die Schicht-3-Meldungen des zweiten Protokolls PRT2 können nicht unmittelbar zwischen dem Endgerät PP und der Peripheriebaugruppe SLM über die Schichten 2 und 1 des zweiten Protokolls L2 PRT2 und L1 PRT2 ausgetauscht werden, da zwischen der Peripheriebaugruppe SLM und der peripheren Einrichtung BS keine physikalische Schicht L1 PRT2 des zweiten Protokolls PRT2 vorhanden ist. In der Praxis heißt das beispielsweise, daß zwischen der Peripheriebaugruppe SLM und der Basisstation BS keine hochfrequenten Signale übertragbar sind.

In dem dargestellten Ausführungsbeispiel ist die Basisstation BS über eine übliche ISDN-Schnittstelle mit 64 kBit B-Kanälen und mit D-Kanal angeschlossen. Da demnach auf der Drahtstrecke zwischen der Kommunikationsvermittlungseinrichtung SWU und der Basisstation BS andere physikalische Bedingungen herrschen wie auf der Luftstrecke zwischen der Basisstation BS und dem Endgerät PP, ist eine besonders strukturierte Schicht-3-Protokollarchitektur erforderlich.

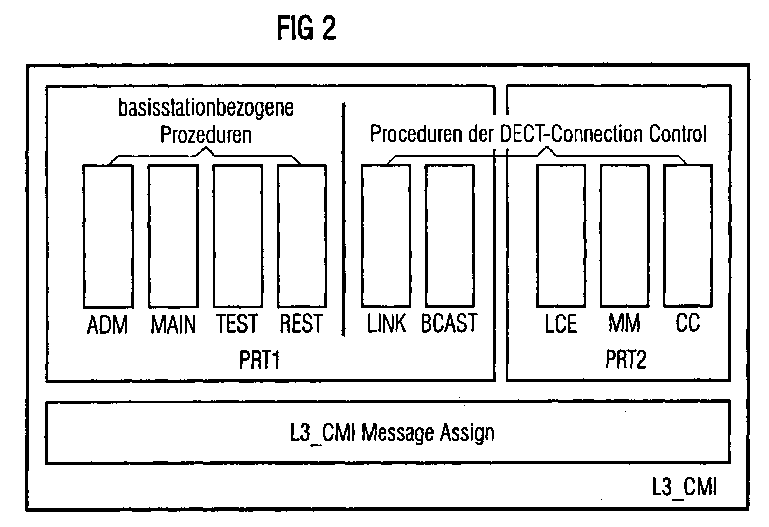

Fig. 2 zeigt für das Ausführungsbeispiel aus Fig. 1 die Aufteilung der Schicht-3-Schnurlosprotokolle PRT1 und PRT2 anhand der Blockdarstellung des Schicht-3-Prozesses L3_CMI abhängig von den physikalischen Besonderheiten.

Die Protokolle PRT1 und PRT2 sind jeweils in Funktionsblöcke aufgeteilt, die durch einen Protokolldiskriminator ADM, MAIN, TEST, REST, LINK, BCAST, LCE, MM und CC gekennzeichnet sind. Die Protokolldiskriminatoren erfüllen eine Verteilfunktion und werden in einer Schicht-3-Meldungs-Zuordnungseinheit "L3_CMI Message Assign" zum gesteuerten Aufruf der dem zugeordneten Protokollfunktionsblock entsprechenden Protokollsteuerung ausgewertet. Innerhalb des Schicht-3-Schnurlosprotokollprozesses L3_CMI werden Meldungen versendet um von einem Protokoll PRT1 in das andere Protokoll PRT2 übergehen zu können. So ergeben sich mehrere parallele Säulen in der Protokollsteuerung, nämlich die in Fig. 2 dargestellten Protokoll-Funktionsblöcke mit den ihren Protokolldiskriminatoren entsprechenden Bezugszeichen ADM, MAIN, TEST, REST, LINK, BCAST, LCE, MM, CC. Innerhalb des ersten Protokolls PRT1 gibt es die Funktionsblöcke für Administration ADM, für Maintenance MAIN, für Testzwecke TEST und für den Restart REST. Außerdem sind für die DECT-Verbindungssteuerung erforderliche Funktionsblöcke für die Anbindung LINK und für die unspezifische Verteilung BCAST (broadcast) vorgesehen. Im zweiten Protokoll PRT2, im Ausführungsbeispiel also im DECT-Protokoll, sind die Funktionsblöcke Verbindungssteuerung CC, Mobility Management MM für An- bzw. Abmeldeprozedur oder Location Request sowie eine für die Vergabe von Linkreferenzen zuständige Funktion LCE vorgesehen.

Grundsätzlich setzt sich eine Protokollmeldung der Schicht-3-Protokolle PRT1, PRT2 zusammen aus einem Protokolldiskriminator zur Kennzeichnung des Protokolls, aus einer Angabe des Meldungstyps, aus Meldungselementen (message element), also den eigentlichen Informationsträgern, sowie aus Timerwerten, das sind definierte Zeitwerte im Protokollverkehr.

Bei dem anhand der Fig. 1 und 2 erläuterten System wird die Basisstation BS zunächst mit Hilfe der basisstationbezogenen Protokollanteile Restart REST, Maintenance MAIN und Administration ADM in Betrieb genommen. Dabei enden alle Meldungen innerhalb der Basisstation BS. Soll nun eine Verbindung zu einem tragbaren Endgerät PP aufgebaut werden, so wird zunächst mit Hilfe der mit Linksteuereinrichtung bezeichneten Komponente LCE eine Luftverbindung zu diesem Endgerät PP hergestellt. Auf dieser Verbindung werden dann Daten zwischen der Schicht 3 des zweiten Protokolls L3 PRT2 in der Peripheriebaugruppe SLM und der Schicht 3 des zweiten Protokolls L3 PRT2 im Endgerät PP ausgetauscht. Diese Schicht-3-Meldungen stellen dabei ein Meldungselement für das erste Protokoll PRT1 dar. Das erste Protokoll PRT1 und das zweite Protokoll PRT2 sind folglich zwischen der Peripheriebaugruppe SLM und der Basisstation BS ineinander verschachtelt.

Da die beschriebenen Protokolle in ihrem Aufbau identisch sind, wird in der Basisstation BS und in der Peripheriebaugruppe SLM eine Auswerteeinrichtung AE2, AE1 verwendet, die für alle Protokolle mit derselben Hauptablaufsteuerung arbeitet. Die Besonderheiten der einzelnen Protokolle werden in Datentabellen, Synthesefunktionen und Analysefunktionen für die einzelnen Meldungselemente gefaßt.

Zur Bearbeitung einer Meldung wird diese dem Schicht-3-Prozeß L3_CMI übergeben. Dort wird anhand des Protokolldiskriminators ADM, MAIN, TEST, REST, LINK, BCAST, LCE, MM oder CC das vorliegende Protokoll bzw. der entsprechende Protokollfunktionsblock ermittelt. In der dann folgenden Auswertung wird die Meldung auf ihre Meldungselemente untersucht und für jedes Meldungselement wird die entsprechende Analysefunktion aufgerufen. Wird innerhalb eines Meldungselementes eine weitere Meldung in einem anderen Protokoll gefunden, so wird diese weitere Meldung rekursiv dem Auswerteprozeß übergeben und der Auswertevorgang startet erneut. Hierbei wird die gesamte Auswertung durch den neuen Protokolldiskriminator auf das andere Protokoll umgeschaltet. Analog hierzu wird beim Sendevorgang ein Protokoll vorgegeben und es werden Meldungselemente synthetisiert. Enthält ein Element eine Meldung in einem anderen Protokoll, wird auch bei der Synthese der Prozeß erneut mit dem neuen Protokolldiskriminator aufgerufen.

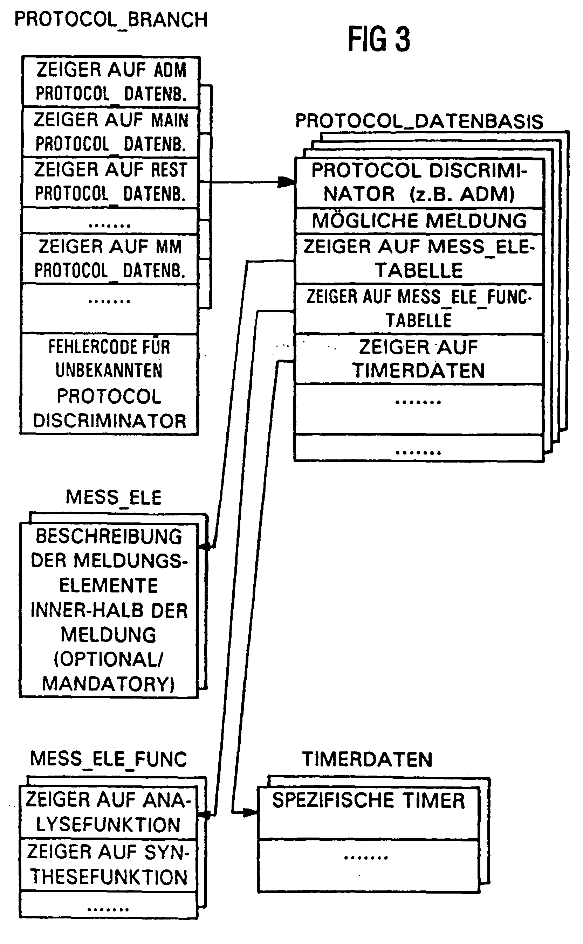

Für die Auswertung werden dabei die folgenden, in Fig. 3 dargestellten Datenstrukturen angelegt:
- Eine Einstiegstabelle PROTOCOL_BRANCH, die sämtliche Protokolltypen entsprechend den Protokolldiskriminatoren enthält und die Zeiger auf die jeweilige PROTOCOL_DATENBASIS hat.
- Zur Beschreibung des jeweiligen Aufbaus jeder möglichen Meldung eines Protokolls eine Vielzahl von PROTOCOL_DATENBASEN, in denen pro Meldungstyp der jeweils Zeiger auf alle betroffenen Meldungselemente steht.
- Solche Meldungselemente sind in einer Tabelle MESS_ELE enthalten, die beschreibt, ob ein Element in der Meldung notwendig (mandatory) oder möglich (optinal) ist.
- Weitere Meldungselemente sind in einer Tabelle MESS_ELE_FUNC beschrieben, die Zeiger auf die Analysefunktion und die Synthesefunktion enthält.
- Weitere Meldungselemente können in der Tabelle Timerdaten enthalten sein, die protokollspezifische Timerwerte enthält.

Der in Fig. 2 gezeigten Schicht-3-Meldungs-Zuordnungseinheit "L3_CMI Message Assign" ist hierbei die Einstiegstabelle PROTOCOL_BRANCH zugeordnet.

Den in Fig. 2 gezeigten Protokoll-Funktionsblöcken ADM, MAIN, TEST, REST, LINK, BCAST, LCE, MM, NC ist jeweils eine PROTOCOL_DATENBASIS zugeordnet.

Durch die in Fig. 3 gezeigte Aufteilung ist es durch Eintrag der entsprechenden Zeiger in die jeweiligen Tabellen möglich, die verschiedenen Elemente, Werte und Funktionen in unterschiedlichen Protokollen zu verwenden.

## Patentansprüche

1. Programmgesteuerte Auswerteeinrichtung für eine meldungsorientierte Schicht-3-Kommunikation zwischen einer Kommunikations-Vermittlungseinrichtung und einer peripheren Einrichtung einer Kommunikationsanlage unter Verwendung eines ersten Protokolls sowie für eine meldungsorientierte Schicht-3-Kommunikation zwischen der Kommunikations-Vermittlungseinrichtung und einem Endgerät unter Verwendung eines zweiten Protokolls über die periphere Einrichtung, wobei das erste und das zweite Protokoll aus durch Protokolldiskriminatoren gekennzeichneten Funktionsblöcken (ADM, MAIN, TEST, REST, LINK, BCAST, LCE, MM, CC) bestehen, wobei jede Protokollmeldung des ersten und des zweiten Protokolls eine Protokolldiskriminatorangabe enthält, und wobei die Auswerteeinrichtung eine einzige Hauptablaufsteuerung hat zur funktionsblockspezifischen, tabellengesteuerten Auswertung des ersten und des zweiten Protokolls mit Hilfe einer protokolldiskriminatorabhängigen Verzweigung.

2. Auswerteeinrichtung nach Anspruch 1, dadurch gekennzeichnet, daß die periphere Einrichtung eine Basisstation ist zum bidirektionalen Umsetzen von drahtgebunden übertragenen Signalen auf der Vermittlungseinrichtungsseite und drahtlos übertragenen Signalen auf der Endgeräteseite und daß die Auswerteeinrichtung für die Schicht-3-Kommunikation zwischen einer Peripheriebaugruppe der Kommunikations-Vermittlungseinrichtung und dieser Basisstation sowie einem drahtlos über diese Basisstation verbindbaren Endgerät vorgesehen ist.

3. Auswerteeinrichtung nach einem der vorhergehenden Ansprüche, dadurch **gekennzeichnet**, daß das zweite Protokoll das Schicht-3-Protokoll nach dem Standard ETS 300 175 (DECT) ist.

4. Auswerteeinrichtung nach einem der vorhergehenden Ansprüche, dadurch **gekennzeichnet**, daß falls eine Meldung des zweiten Protokolls für eine Kommunikation zwischen der Kommunikations-Vermittlungseinrichtung und dem Endgerät als Meldungselement des ersten Protokolls zwischen der Kommunikations-Vermittlungseinrichtung und der peripheren Einrichtung übermittelt wird, die Hauptablaufsteuerung zuerst zur Auswertung der Meldung des ersten Protokolls und dann zur Auswertung der Meldung des zweiten Protokolls aufgerufen wird.

5. Auswerteeinrichtung nach einem der vorhergehenden Ansprüche, bestehend aus einer Steuereinrichtung und mindestens einer Speichereinrichtung zum Speichern der Hauptablaufsteuerung, zum Speichern von Analyse- und Synthesefunktionen, zum Speichern einer alle Protokolldiskriminatoren enthaltenden Protokollverzweigungstabelle (PROTOCOL_BRANCH) als Einstiegstabelle und zum Speichern einer Datenbasis-Tabelle (PROTOCOL_DATABASE) für jeden Protokolldiskriminator, die jeweils den Aufbau aller Meldungen des zugehörigen Protokollfunktionsblocks enthält und auf die jeweils ein Zeiger der Protokollverzweigungstabelle (PROTOCOL_BRANCH) zeigt, um die protokolldiskriminatorabhängige Verzweigung zu bewirken.

6. Auswerteeinrichtung nach Anspruch 5, dadurch **gekennzeichnet**, daß die Speichereinrichtung eine Meldungselementetabelle (MESS_ELE) speichert, die für jedes Meldungselement angibt, ob es notwendig oder möglich ist, eine Meldungselement-Funktionstabelle (MES_ELE_FUNC) speichert, die Zeiger auf die Analysefunktion und die Synthesefunktion der einzelnen Meldungselemente enthält, und eine protokollspezifische Zeitwerte enthaltende Timerwertetabelle (TIMER_DATEN) speichert, wobei die einzelnen Datenbasis-Tabellen (DATA_BASE) jeweils Zeiger auf für jeden einzelnen Meldungsaufbauerforderliche Meldungselemente bzw. Zeitwerte der Meldungselementetabelle (MES_ELE), der Meldungselement-Funktionstabelle (MES_ELE_FUNC) und der Timerwertetabelle (TIMER_DATEN) enthalten.

7. Einrichtung nach Anspruch 6, dadurch **gekennzeichnet**, daß die Meldungselemente-Tabelle (MES_ELE) aus einer MeldungstypTabelle besteht und aus Informationselemetetabellen, wobei die Meldungstyptabelle Zeiger für jeden Meldungstyp auf eine Informationselementetabelle hat, die ihrerseits angibt, ob die Informationselemente des jeweiligen Meldungstyps notwendig oder möglich sind.
